(19) Europäisches Patentamt
European Patent Office
Office européen des brevets

(11) EP 2 301 892 A1

(12) **EUROPEAN PATENT APPLICATION**
published in accordance with Art. 153(4) EPC

(43) Date of publication:
**30.03.2011 Bulletin 2011/13**

(51) Int Cl.:
*C01G 53/00* (2006.01)   *H01M 2/16* (2006.01)
*H01M 4/50* (2010.01)   *H01M 4/52* (2010.01)

(21) Application number: **09762558.6**

(22) Date of filing: **08.06.2009**

(86) International application number:
**PCT/JP2009/060809**

(87) International publication number:
**WO 2009/151128 (17.12.2009 Gazette 2009/51)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **11.06.2008 JP 2008152624**

(71) Applicant: **Sumitomo Chemical Company, Limited Tokyo 104-8260 (JP)**

(72) Inventors:
• **PITTELOUD, Cedric**
  **4132 Muttenz (CH)**
• **ISOBE, Toshinori**
  **Tsuchiura-Shi, Ibaraki (JP)**
• **IMANARI, Yuichiro**
  **Tsukuba-shi**
  **Ibaraki 305-0005 (JP)**

(74) Representative: **Hart-Davis, Jason et al**
  **Cabinet Beau de Loménie**
  **158, rue de l'Université**
  **75340 Paris Cedex 07 (FR)**

(54) **METHOD FOR PRODUCING LITHIUM COMPLEX METAL OXIDE**

(57) A method for producing a layered lithium mixed metal oxide according to the present invention comprises a step of calcining, in the presence of an inert flux composed of a chloride, a lithium mixed metal oxide raw material containing a transition metal element and a lithium element so that the molar ratio of the lithium element to the transition metal element may fall within a range of 1 or more and 2 or less.

EP 2 301 892 A1

**Description**

Technical Field

The present invention relates to a method for producing a lithium mixed metal oxide. More particularly, the present invention relates to a method for producing a layered lithium mixed metal oxide used for a positive electrode active material in a nonaqueous electrolyte secondary battery.

Background Art

A lithium mixed metal oxide is used for a positive electrode active material in a nonaqueous electrolyte secondary battery such as a lithium secondary battery or the like. The lithium secondary battery has already been put into practical use as electric sources for cellular phones, laptop computers and the like. Further, application thereof has been tried in medium- and large-size uses such as uses in automobiles, electric powder storages, and the like.

As a conventional lithium mixed metal oxide, JP10-324521A describes a lithium-manganese mixed metal oxide having a spinel structure.

Disclosure of the Invention

A nonaqueous electrolyte secondary battery in which the above-described lithium mixed metal oxide having the spinel structure is used as a positive electrode active material is not preferable in uses requiring high output at a high current rate, i.e., uses in automobiles and uses in power tools such as an electric tool.

An object of the present invention is to provide a method for producing a lithium mixed metal oxide that can provide a nonaqueous electrolyte secondary battery capable of exhibiting higher output at a higher current rate.

The present inventors have conducted various studies with attention focused on a layered structure as a crystal structure different from the spinel structure. As a result, the present inventors have found that the following invention meets the above-described object, and the present invention has been thus achieved.

The present invention provides the following aspects.

<1> A method for producing a layered lithium mixed metal oxide, the method comprising a step of calcining, in the presence of an inert flux composed of a chloride, a Lithium mixed metal oxide raw material containing a transition metal element and a lithium element so that the molar ratio of the lithium element to the transition metal element may fall within a range of 1 or more and 2 or less.

<2> The production according to <1>, wherein lithium mixed metal oxide material is a mixture of a lithium compound and a transition metal element raw material.

<3> The production method according to <2>, wherein the transition metal element raw material contains Fe.

<4> The production method according to <3>, wherein the transition metal element raw material contains Fe, and further contains one or more elements selected from the group consisting of Ni, Mn, and Co.

<5> The production method according to any one of <1> to <4>, wherein the inert flux composed of a chloride is KCl.

<6> The production method according to any one of <1> to <5>, wherein the amount of the inert flux is 0.1 part by weight or more and 100 parts by weight or less with respect to 100 parts by weight of the lithium mixed metal oxide raw material.

<7> The production method according to any one of <1> to <6>, wherein the retention temperature in the calcination is within a range of from 650°C to 850°C.

<8> A layered lithium mixed metal oxide obtained by the Production method according to any one of <1> to <7>.

<9> A positive electrode active material for a electrolyte secondary battery, the positive electrode active material comprising layered lithium mixed metal oxide according to <8>.

<10> A positive electrode for a nonaqueous electrolyte secondary battery, positive electrode comprising the positive electrode active material for a nonaqueous electrolyte secondary battery according to <9>.

<11> A nonaqueous electrolyte secondary battery comprising the positive electrode for a nonaqueous electrolyte secondary battery according to <10>.

<12> The nonaqueous electrolyte secondary battery according to <11> further comprising a separator.

<13> The nonaqueous electrolyte secondary battery according to <12>, wherein the separator is a separator composed of a porous laminate film in which a heat resistant porous layer and a porous film containing a thermoplastic resin are stacked each other.

Best Mode for Carrying Out the Invention

**Method for producing layered lithium mixed metal oxide**

A method for producing a lithium mixed metal oxide according to the present invention comprises a step of calcining, in the presence of an inert flux composed of a chloride, a lithium mixed metal oxide raw material containing a transition metal element and a lithium element so that the molar ratio of the lithium element to the transition metal element may fall within a range of 1 or more and 2 or less.

When the molar ratio of the lithium element to the transition metal element is less than 1, the lithium mixed metal oxide tends to have a rock salt structure, or the spinel structure, and an output property at a hight current rate (hereinafter, referred to as a rate property in some cases) of a nonaqueous electrolyte secondary battery to be obtained is not sufficient. When the above-described molar ratio is more than 2, the lithium mixed metal oxide has a large amount of excess lithium that causes the generation of impurities such as lithium carbonate and the like, the rate property of the nonaqueous electrolyte secondary battery to be obtained is not sufficient, and it is difficult to obtain a high discharge capacity. In the present invention, for more enhancing the rate property of the battery to be obtained, the molar ratio of the lithium element to the transition metal element is preferably 1.05 or more and 1.5 or less.

(Lithium mixed metal oxide raw material)

A lithium mixed metal oxide raw material is not particularly limited as long as a layered lithium mixed metal oxide is produced by calcining thereof, and is preferably a mixture of a lithium compound and a transition metal element raw material. Examples of the transition metal element raw material include oxides, hydroxides, (oxyhydroxides are included. the same applies to cases below), chlorides, carbonates, surfaces, nitrate, oxalates, and acetates of the transition metal element. As the lithium compound, lithium hydroxide and/or lithium hydroxide monohydrate are preferably used, and lithium carbonate is also a preferable lithium compounds. As the transition metal element raw material, hydroxides are preferably used. The transition metal element raw material preferably contains a plurality of transition metal elements and, in this case, a compound containing the plurality of transition metal elements is preferably used as the transition metal element raw material. The compound can be obtained by coprecipitation, and the compound is preferably a hydroxide.

(Transition metal element raw material)

A transition metal element raw material preferably contains Fe. Regarding the preferable amount of Fe, the amount of Fe (mol) with respect to the total amount of transition metal elements (mol) is within a range of 0.01 or more and 0.5 and less, and more preferably within a range of 0.05 or more and 0.3 or less. For enhancing the rate property of a nonaqueous electrolyte secondary battery to be obtained, the transition metal element raw material preferably contains Fe and further contains one or more elements selected from the group consisting of Ni, Mn, and Co, and more preferably contains Fe and further contains Ni and/or Mn. In the present invention, it is possible to obtain a layered lithium mixed metal oxide capable of providing a nonaqueous electrolytes secondary battery having high rate property without using a Co raw material used for a conventional positive electrode active material.

(Inert Flux)

An inert flux is difficult to react with the lithium mixed metal oxide raw material during the calcination, and is selected from chlorides. Examples of the chlorides include chlorides of metal ions each having an ion radius larger than that of a lithium ion, and specific examples thereof include NaCl. KCl, RbCl, CsCl, $CaCl_2$, $SrCl_2$, $BaCl_2$, and $MgCl_2$. The present inventors have conducted various studies using such chlorides, and have found that KCl is particularly preferable as the inert flux for obtaining a layered lithium mixed metal oxide having high crystallizability and having fine particles with a little interparticle aggregation of primary particles and, further, by using this, it is possible to obtain a layered lithium mixed metal oxide capable of providing a nonaqueous electrolyte secondary battery having high rate property.

The amount of presence of the inert flux is usually 0.1 part by weight or more and 100 parts by weight or less with respect to 100 parts by weight of the lithium mixed metal oxide raw material. The amount of presence of the inert flux is preferably within a range of 0.5 part by weight or more and 90 parts by weight or less, more preferably within a range of 1 part by weight or more and 80 parts by weight or less, and particularly preferably within a of 20 parts by weight or more and 80 parts by weight or less.

(Calcination)

The retention temperature in the calcination is an important factor for controlling a BET specific surface area of a resultant layered lithium mixed metal oxide. Usually, as the retention temperature is higher, the BET specific surface area tends to be reduced. On the other hand, as the retention temperature is lower, the BET specific surface area tends to be increased correspondingly. An example of the retention temperature is within a range of 650°C or more and 850°C or less. The time of keeping the retention temperature is usually 0.1 to 20 hours, and preferably 0.5 to 8 hours. A temperature rising rate up to the retention temperature is usually 50°C to 400°C/hour, and a temperature dropping rate down to room temperature from the retention temperature is usually 10°C to 400°C/hour. As the calcination atmosphere, air, oxygen, nitrogen, argon or mixed gas thereof can be used, and an air atmosphere is preferable.

(Other steps)

After the calcination, a resultant layered lithium mixed metal oxide may be pulverized using a ball mill, jet mill and the like. There are cases where the BET specific surface area of the layered lithium mixed metal oxide can be controlled by pulverization. The pulverization and the calcination may be repeated twice or more. The layered lithium mixed metal oxide can also be washed or classified, if necessary.
After the calcination, the inert flux may remain in the lithium mixed metal oxide, or may be removed from the Lithium mixed metal oxide. The removal may be appropriately carried out by washing, vaporization and the like.

**Layered Lithium mixed Metal Oxide**

A layered lithium mixed metal oxide of the present invention is obtained by, e.g., the above-described production method, and is useful for a nonaqueous electrolyte secondary battery capable of exhibiting high output at a high current rate.

(Size)

The layered lithium mixed metal oxide is usually composed of a mixture of primary particles having a particle size of 0.05 $\mu$m or more and 1 $\mu$m or less and secondary particles that are formed by aggregation of primary particles and have a particle size of 2 $\mu$m or more and 100 $\mu$m or less. The particle size of each of the primary particle and the secondary particle can be measured by observation using a SEM. For more enhancing the effect of the present invention, the size of the secondary particle is preferable 2 $\mu$m or more and 50 $\mu$m or less, and more preferably 2 $\mu$m or more and 10 $\mu$m or less.

(Crystal Structure)

A crystal structure of the layered lithium mixed metal oxide has a layered structure, and the crystal structure thereof is preferably a crystal structure belonging to an R-3m space group or a C2/m space group from the standpoint of discharge capacity of the nonaqueous electrolyte secondary battery to be obtained. The R-3m space group is included in a hexagonal crystal structure, and the hexagonal crystal structure belongs to one space group selected from P3, $P3_1$, $P3_2$, R3, P-3, R-3, P312, P321, $P3_1$12, $P3_1$21, $P3_2$12, $P3_2$21, R32, P3m1, P31m, P3c1 P31c, R3m, R3c, P-31m, P-31c, P-3m1, P-3c1, R-3m, R-3c, P6, $P6_1$, $P6_5$, $P6_2$, $P6_4$, $P6_3$, P-6,P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc. The C2/m space group is included in a monoclinic crystal structure, and the monoclinic crystal structure belongs to one space group selected from P2, $P2_1$, C2, Pm, Pc, Cm, Cc, P2/m, $P2_1$/m, C2/m, P2/c, $P2_1$/c, and C2/c. The crystal structure of the lithium mixed metal oxide can be identified from a powder X-ray diffraction pattern obtained by powders X-ray diffractometry using CuK$\alpha$ as a radiation source.

(Composition)

When the transition metal element in the layered lithium mixed metal oxide is one of more transition metal elements selected from the group consisting of Ni, Mn, Co, and Fe, a part of the transition metal element may be substituted by other elements within a range where the effect of the present invention is not impaired. Examples of the other elements include B, Al, Ga, In, Si, Ge, Sn, Mg, Sc, Y, Zr, Hf, Nb, Ta, Cr, Mo, W, Tc, Ru, Rh, Ir, Pd, Cu, Ag, and Zn.
Within a range where the effect of the present invention is not impaired, onto the surface of the particle constituting the layered lithium mixed metal oxide, a compound different from the oxide may be adhered. The compound is a compound containing one or more elements selected from B, Al, Ga, In, Si, Ge, Sn, Mg, and transition metal elements, preferably a compound containing one or more elements selected from B, Al, Mg, Ga, In, and Sn, and more preferably a compound of Al. Specific examples of the compound include oxides, hydroxides, oxyhydroxides, carbonates, nitrates, and organic acid salts of the above-described elements, and oxides, hydroxides, and oxyhydroxides are preferable. These compounds may be used in admixture. Among the compounds, alumina is a particularly preferable compound. Heating may be performed after the adhesion.

**Positive electrode active material for nonaqueous electrolyte secondary battery and positive electrode for nonaqueous electrolyte secondary battery**

A positive electrode active material for the nonaqueous electrolyte secondary battery contains the above-described lithium mixed metal oxide, and usually contains the lithium mixed metal oxide as a major component (e.g., the lithium mixed metal oxide is 60% by weight or more with respect to the positive electrode active material for the nonaqueous electrolyte secondary battery), and is suitable for the nonaqueous electrolyte secondary battery.
By using the positive electrode active material for the nonaqueous electrolyte secondary battery, a positive electrode for the nonaqueous electrolyte secondary battery can be produced, e.g., in the following manner.
The positive electrode for the nonaqueous electrolyte secondary battery is produced by, e.g., causing a positive electrode current collector to support thereon a positive electrode mixture containing a positive electrode active material, electrical conductive material, and binder.

(Electrical conductive material)

As the electrical conductive material, a carbonaceous material, can be used, and examples of the carbonaceous material include a graphite powder, carbon black, acetylene black, filamentous carbon material and the like. Carbon black and acetylene black are composed of fine particles and have large surface areas so that electric conductivity in positive electrode can be enhanced, and charge and discharge efficiency and the rate property can be improved by adding a small amount of carbon black or acetylene black into the positive electrode mixture. However, when an excessively large amount of carbon black or acetylene black is added, an adhesion property by the binder between the positive electrode mixture and the positive electrode current collector is reduced, which leads to an increase in internal resistance. Usually, the proportion of the electrical conductive material in the positive electrode mixture is 5 parts by weight or more and 20 parts by weight or less with respect to 100 parts by weight of the positive electrode active material. When the filamentous carbon materials such as graphitized carbon fiber, carbon nanotube and the like are used as the electrical conductive material, the proportion thereof can be lowered.

(Binder)

As the binder, thermoplastic resins can be used, and specific examples of the thermoplastic resins include fluorine resins such as polyvinylidene fluoride (hereinafter, referred to as PVdF in some cases), polytetrafluoroethylene (hereinafter, referred to as PTFE in some cases), ethylene tetrafluoride propylene hexafluoride vinylidene fluoride copolymer, propylene hexafluoride vinylidene fluoride copolymer, and ethylene tetrafluoride perfluoro vinyl ether copolymer, and polyolefin resins such as polyethylene, and polypropylene. Two or more of these may be used in admixture. In addition, the positive electrode mixture superior in adhesion property with the positive electrode current collector can be obtained by using a fluorine resin and a polyolefin resin as the binder, and containing them such that the proportion of the fluorine resin with respect to the positive electrode mixture is from 1 to 10% by weight and the proportion of the polyolefin resin with respect to the positive electrode mixture is from 0.1 to 2% by weight.

(Positive electrode current collector)

As the positive electrode current collector, Al, Ni, stainless steel and the like can be used, and Al is preferable in terms of its easiness in processing into a thin film, and low cost.

(Supporting)

An example of a method for causing the positive electrode current collector to support thereon the positive electrode mixture includes a method of pressure molding or a method of forming the positive electrode mixture into a paste by using an organic solvent and the like, then applying and drying the paste on the positive electrode current collector, dressing this to fix the mixture. In the case of pasting, a slurry composed of the positive electrode active material, electrical conductive material, binder, and organic solvent is prepared. Examples of the organic solvent include amine solvents such as N,N-dimethylaminopropylamine, and diethylenetriamine, ether solvents such as tetrahydrofuran, ketone solvents such as methyl ethyl ketone, ester solvents such as methyl acetate, and amide solvents such as dimethylacetamide, and N-methyl-2-pyrrolidone.

Examples of a method of applying the positive electrode mixture on the positive electrode current collector include a slit die coating method, screen coating method, curtain coating method, knife coating method, gravure coating method, and electrostatic spray method. By the methods mentioned above, the positive electrode for the nonaqueous electrolyte secondary battery can be produced.

**Nonaqueous electrolyte secondary battery**

A nonaqueous electrolyte secondary battery can be produced by the following method using the above-described positive electrode for the nonaqueous electrolyte secondary battery. For example, an electrode group obtained by stacking and winding a separator, negative electrode, and the above-described positive electrode is accommodated in a battery can, and is then impregnated with an electrolytic solution composed of an organic solvents containing an electrolyte, whereby the nonaqueous electrolyte secondary battery can be produced.

Examples of the shape of the electrode group include a shape that gives a cross section of a circular shape, an elliptical shape, a rectangular shape, a corner-rounded rectangular shape or the like, when the electrode group is cut in the direction perpendicular to the axis of winding thereof. Examples of the shape of the battery include a paper shape, a coin shape, a cylinder shape, and an angular shape.

(Negative electrode)

A negative electrode may be an electrode capable of being doped or dedoped with a lithium ion at potential lower than the positive electrode, and an example thereof includes an electrode in which a negative electrode mixture containing a negative electrode material is supported on a negative electrode current collector, or an electrode composed sorely of the negative electrode material. Examples of the negative electrode material include carbonaceous materials, chalcogen compounds (oxides, sulfides and the like), nitrides, metals or alloys, which can be doped or dedoped with a lithium ion at potential lower than the positive electrode. These negative electrode materials may also be used in admixture.

The negative electrode materials will be exemplified below. Specific examples of the above-described carbonaceous materials include graphites such as natural graphite, artificial graphite, cokes, carbon black, pyrolytic carbons, carbon fiber, and calcined organic polymer compound. Specific examples of the above-described oxides includes oxides of silicon represented by the formula $SiO_x$ (wherein, x represents a positive real number) such as $SiO_2$, and SiO, oxides of titanium represented by the formula $TiO_x$ (wherein, x represents a positive real number) such as $TiO_2$, and TiO, oxides of vanadium represented by the formula $VO_x$ (wherein, x represents a positive real number) such as $V_2O_5$, and $VO_2$, oxides of iron represented by the formula $FeO_x$ (wherein, x represents a positive real number) such as $Fe_3O_4$, $Fe_2O_3$, and FeO, oxides of tin represented by the formula $SnO_x$ (wherein, x represents a positive real number) such as $SinO_2$, and SnO, oxides of tungsten represented by the general formula $WO_x$ (wherein, x represents a positive real number) such as $WO_3$, and $WO_2$, and mixed metal oxides containing lithium and titanium and/or vanadium such as $Li_4Ti_5O_{12}$, and $LiVO_2$ (e.g., $Li_{1.1}V_{0.9}O_2$). Specific examples of the above-described sulfides include sulfides of titanium represented by the formula $TiS_x$ (wherein, x represents a positive real number) such as $Ti_2S_3$, $TiS_2$, and TiS, sulfides of vanadium represented by the formula $VS_x$ (wherein, x represents a positive real number) such as $V_3S_4$, $VS_2$, and VS, sulfides of iron represented by the formula $FeS_x$ (wherein, x represents a positive real number) such as $Fe_3S_4$, $FeS_2$, and FeS, sulfides of molybdenum represented by the formula $MoS_x$ (wherein, x represents a positive real number) such as $MO_2S_3$, and $MOS_2$, sulfides of tin represented by the formula $SnS_x$ (wherein, x represents a positive real number) such as $SnS_2$, and SnS, sulfides of tungsten represented by the formula $WS_x$ (wherein, x represents a positive real number) such as $WS_2$, sulfides of antimony represented by the formula $SbS_x$ (wherein, x represents a positive real number) such as $Sb_2S_3$, and sulfides of selenium represented by the formula $SeS_x$ (wherein, x represents a positive real number) such as $Se_5S_3$, $SeS_2$, and SeS. Specific examples of the above-described nitrides, include lithium-containing nitrides such as $Li_3N$, and $L1_{3-x}A_xN$ (wherein, A represents Ni and/or Co, and 0<x<3). These carbonaceous materials, oxides, sulfides, and nitrides may be used in combination, and may be either crystal or amorphous. These carbonaceous materials, oxides, sulfides and nitrides are mainly supported on the negative electrode current collector to be used as the electrode.

Examples of the above-described metals include lithium metals, silicon metals, and tin metals. Examples of the above-described alloys include lithium alloys such as Li-Al, Li-Ni, and Li-Si, silicon alloys such as Si-Zn, tin alloys such as Sn-Mn, Sn-Co, Sn-Ni, Sn-Cu, and Sn-La, and additionally, alloys such as $C_{U2}Sb$, and $La_3Ni_2Sn_7$. These metals and alloys are mainly used singly as the electrode (for example, used in the form of foil).

Among the negative electrode materials, carbonaceous materials composed of graphites such as natural graphite, and artificial graphite as a major component are preferably used from the standpoints of high potential flatness, low average discharge potential, superior cyclic performance and the like. The shape of the carbonaceous material may be, for example, any of flake such as natural graphite, sphere such as mesocarbon microbeads, fiber such as graphitized carbon fiber, aggregate of fine powder, and the like.

The negative electrode mixture may contain a binder on an as needed basis. The binder includes thermoplastic resins, and specific examples thereof include PVdF, thermoplastic polyimide, carboxymethylcellulose, and polyethylene, polypropylene.

(Negative electrode current collector)

Examples of a negative electrode current collector include Cu, Ni, and stainless steel, and in terms of difficulty in making an alloy with lithium and easiness in processing into a thin film, Cu may be advantageously used. A method for causing the negative electrode current collector to support thereon the negative electrode mixture is similar to the case with the positive electrode and, accordingly, examples thereof include a method of pressure molding, or a method of forming the negative electrode mixture into a paste by using a solvents and the like, then applying and drying the paste on the negative electrode current collector, dressing this to fix the mixture.

(Separator)

As a separator, a member having a form such as a porous film, non-woven fabric, and woven fabric and made of a material of a polyolefin resin such as polyethylene, and polypropylene, a fluorine resin, or a nitrogen-containing aromatic polymer can be used. Furthermore, two or more of the above-described materials may be used to form the separator, or the above-described members may be stacked to form the separator. Examples of the separator include separators described in JP2000-30686A, JP10-324758A, and the like. From the standpoints of increase in the volume energy density of a battery and decrease in internal resistance thereof, the thickness of the separator is preferably smaller as long as the mechanical strength can be maintained, and is usually about 5 to 200 $\mu$m, and preferably about 5 to 40 $\mu$m.

In the nonaqueous electrolyte secondary battery, usually, when an extraordinary current flows in the battery due to a short circuit between a positive electrode and a negative electrode, or the like, it is important to interrupt the current to block the flow of excessive current (to shutdown). Consequently, when a usual use temperature is exceeded, the separator is required to perform the shutdown (obstruct micropores of a porous film) at a temperature as low as possible, and then maintain, even when the temperature in the battery is increased to a certain high temperature after shutdown, the shutdown condition without being ruptured due to the temperature, in other words, the separator is required to have high heat resistance. As the separator, by using a separator composed of a porous laminate film in which a heat resistant porous layer and a porous film containing a thermoplastic resin are stacked each other, it becomes possible to further increase a thermal film rupture temperature. The heat resistant porous layer may be stacked on both sides of the porous film.

A description will be given hereinbelow of the above-described separator composed of the porous laminate film in which the heat resistant porous layer and the porous film containing the thermoplastic resin are stacked each other.

In the porous laminate film described above, the heat resistant porous layer may be formed from an inorganic powder, and may also contain a heat resistant resin. Examples of the heat resistant resin include polyamide, polyimide, polyamideimide, polycarbonate, polyacetal, polysulfone, polyphenylene sulfide, polyether ketone, aromatic polyester, polyether sulfone, and polyether imide, and from the standpoint of further enhancing heat resistance, polyamide, polyimide, polyamideimide, polyether sulfone, and polyether imide are preferable, and polyamide, polyimide and polyamideimide are more preferable. Further more preferable are nitrogen-containing aromatic polymers such as aromatic polyamide (para-oriented aromatic polyamide, meta-oriented aromatic polyamide), aromatic polyimide, and aromatic polyamideimide, particularly preferable is aromatic polyamide and, in terms of production, especially preferable is para-oriented aromatic polyamide (hereinafter, referred to as "para-aramide" in some cases). Examples of the heat resistant resin also include poly-4-methylpentene-1 and cyclic olefin polymers. By using these heat resistant resins, the heat resistance, i.e., the thermal film rupture temperature can be further increased.

The thermal film rupture temperature depends on the type of the heat resistant resin, and the thermal film rupture temperature is usually 160°C or more. By using the above-described nitrogen-containing aromatic polymers as the heat resistant resin, the thermal film rupture temperature can be increased up to about 400°C. When poly-4-methylpentene-1 is used, the thermal film rupture temperature can be increased up to about 250°C. When cyclic olefin polymers are used, the thermal film rupture temperature can be increased up to about 300°C.

The para-aramide is obtained by condensation polymerization of a para-oriented aromatic diamine and a para-oriented dicarboxylic halide, and consists substantially of a repeating unit in which an amide bond is linked at a para-position or equivalently oriented position (for example, the oriented position extending coaxially or in parallel to the opposite direction, such as 4,4'-biphenylene, 1,5-naphthalene, and 2,6-naphthalene) of an aromatic ring. Specific examples thereof include para-aramides having a para-oriented-type structure and a quasi-para-oriented-type structure, such as poly(para-phenyleneterephthalamide), poly(para-benzamide), poly(4,4'-benzanilide terephthalamide), poly(para-phenylene-4,4'-biphenylene dicarboxylic amide), poly(para-phenylene-2,6-naphthalene dicarboxylic amide), poly (2-chloro-para-phenyleneterephthalamide), and para-phenyleneterephthalamide/2,6-dichloro para-phenyleneterephthalamide copolymer.

As the aromatic polyimide, preferable are wholly aromatic polyimides produced by condensation polymerization of an aromatic diacid anhydride and a diamine. Specific examples of the dianhydride include pyromellitic dianhydride, 3,3',4,4'-diphenylsulfone tetracarboxylic dianhydride, 3,3',4,4'-benzophenone tetracarboxylic dianhydride, 2,2'-bis(3,4-dicarboxyphenyl)hexafluoropropane, and 3,3',4,4'-biphenyl tetracarboxylic dianhydride. Specific examples of the diamine include oxydianiline, para-phenylenediamine, benzophenonediamine, 3,3'-methylenedianiline, 3,3'-diaminobenzophenone, 3,3'-diaminodiphenylsulfone, and 1,5'-naphthalenediamine. A polyimide soluble in a solvent can be suitable used. An example of such a polyamide includes a polyimide as a polycondensate of 3,3',4,4'-di-phenylsulfone tetracarboxylic dianhydride with an aromatic diamine.

Examples of the aromatic polyamideimide include those obtained by condensation polymerization of an aromatic dicarboxylic acid and an aromatic diisocyanate., and those obtained by condensation polymerization of an aromatic dianhydride, and an aromatic diisocyanate. Specific examples of the aromatic dicarboxylic acid include isophthalic acid, and terephthalic acid. Specific examples of the aromatic diacid anhydride include trimellitic anhydride. Specific examples of the aromatic diisocyanate include 4,4'-diphenylmethane diisocyanate, 2,4-tolylene diisocyanate, 2,6-tolylene diisocyanate, ortho-tolylane diisocyanate, and m-xylene diisocyanate.

For further enhancing ion permeability, the thickness of the heat resistant porous layer is preferably 1 μm or more and 10 μm or less, more preferably 1 μm or more and 5 μm or less, and particularly preferably 1 μm or more and 4 μm or less to be a thinner heat resistant porous layer. The heat resistant porous layer has micropores, and the pore size (diameter) is usually 3 μm or less, and preferably 1 μm or less. The heat resistant layer may contain fillers described later.

In the porous laminate film, the porous film contains a thermoplastic resin, and has a shutdown function. The porous film micropores, and the pore size is usually 3 μm or less, and preferably 1 μm or less. The porous film has a porosity of usually 30 to 80% by volume, and preferably 40 to 70% by volume. In the nonaqueous electrolyte secondary battery, when the usual use temperature is exceeded, the porous film plays a role of obstructing micropores due to softening of the thermoplastic resin constituting the porous film.

The thermoplastic resin includes those which are softened at 80 to 180°C, and those that are not dissolved in an electrolytic solution of the nonaqueous electrolyte secondary battery may be advantageously selected. Specific examples of the thermoplastic resin include polyolefins such as polyethylene, and polypropylene, and thermoplastic polyurethane, and a mixture of two or more of these may also be used. For softening at lower temperature to perform the shutdown, polyethylene is preferable. Specific examples of the polyethylene include polyethylenes such as low density polyethylene, high density polyethylene, and linear polyethylene, and ultrahigh molecular weight polyethylene is also included. For further enhancing the puncture strength of the porous film, the thermoplastic resin preferably contains at least the ultrahigh molecular weight polyethylene. In terms of production of the porous film, it is preferable in some cases that the thermoplastic resin contain a wax composed of a polyolefin of low molecular weight (weight average molecular weight of 10000 or less).

The thickness of the porous film is usually 3 to 30 μm, and further preferably 3 to 20 μm. The thickness of the separator composed of the porous laminate film in which the heat resistant porous layer and the porous film are stacked each other is usually 40 μm or less, and preferably 20 μm or less. When it is assumed that the thickness of the heat resistant layer is A (μm) and the thickness of the shutdown layer is B (μm), the value of A/B is preferably 0.1 or more and 1 or less.

When the above-described heat resistant porous layer contains the heat resistant resin, the heat resistant porous layer may also contain one or more fillers. The material of the filler may be a material selected from an organic powder, inorganic powder or mixture thereof. The average particle size of particles constituting the filler is preferably 0.01 μm or more and 1 μm or less.

Examples of the organic powder include powders made of organic substances such as a homopolymer of or a copolymer of two or more kinds of styrene, vinyl ketone, acrylonitrile, methyl methacrylate, ethyl methacrylate, glycidyl methacrylate, glycidyl acrylate, and methyl acrylate; fluorine-containing resins such as polytetrafluoroethylene, ethylene tetrafluoride-propylene hexafluoride copolymer, ethylene tetrafluoride-ethylene copolymer, and polyvinylidene fluoride; melamine resins; urea resins; polyolefins; and polymethacrylate. The organic powders may be used singly, or in admixture of two or more. Among the organic powders, a polytetrafluoroethylene powder is preferable in terms of chemical stability.

Examples of the inorganic include powders composed of inorganic such as metal oxides, metal nitrides, metal carbides, metal hydroxides, carbonates, and sulfates, and specific examples thereof include powders composed of alumina, silica, titanium dioxide, or calcium carbonate. The inorganic powders may be used singly or in admixture of two or more. Among the inorganic powders, an alumina powder is preferable in terms of chemical stability. It is more preferable that all particles constituting the filler be alumina particles, and further more preferable is an embodiment in which all particles constituting the filler are alumina particles and a part or all of them are approximately spherical alumina particles.

The content of the filler in the heat resistant porous layer varies depending on the specific gravity of the material of the filler. For example, in the case where all particles constituting the filler are alumina particles, the weight of the filler is usually 20% by weight or more and 95% by weight or less, and preferably 30% by weight or more and 90% by weight or less, assuming that the total weight of the heat resistant porous layer is 100. These ranges can be appropriately set, depending on the specific gravity of the material of the filler.

The shape of the filler includes an approximately spherical shape, plate shape, column shape, needle shape, whisker shape, fiber shape and the like, and any particles of these shapes may be used. Approximately spherical particles are preferable because of easiness in forming uniform pores.

The air permeability of the separator is, in terms of the Gurley method, preferably 50 to 300 sec/100 cc, and further preferably 50 to 200 sec/100 cc from the standpoint of the ion permeability. The separator has a porosity of usually 30 to 80% by volume, and preferably 40 to 70% by volume.

(Electrolytic solution)

In an electrolytic solution, examples of an electrolyte include lithium salts such as $LiClO_4$, $LiPF_6$, $LiAsF_6$, $LiSbF_6$, $LIBF_4$, $LiCF_3SO_3$, $LiN (SO_2CF_3)_2$, $LiC (SO_2CF_3)_3$, $Li_2B_{10}Cl_{10}$, lower aliphatic carboxylic acid lithium salts, and $LiAlCl_4$, and a mixture of two or more thereof may also be used. Among these, a lithium salt containing fluorine, which includes at least one member selected from the group consisting of $LiPF_6$, $LiAsF_6$, $LiSbF_6$, $LiBF_4$, $LiCF_3SO_3$, $LiN (SO_2CF_3)_2$ and $LiC (SO_2CF_3)_3$, is usually used as the lithium salt.

In the electrolytic solution, examples of the organic solvent, which can be used, include c carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile, and butyronitrile; amides such as N,N-dimethylformamide, and N,N-dimethylacetamide; carbamates such as 3-methyl-2-oxazolidone; sulfur-containing compounds such as sulfolane, dimethyl sulfoxide, and 1,3-propane sultone; and those obtained by introducing a fluorine substituent into the above-described organic solvents, and usually, two or more of these solvents are used in admixture. Of them, preferable are mixed solvents containing carbonates, and further preferable are mixed solvents of cyclic carbonates and non-cyclic carbonates or mixed solvents of cyclic carbonates and ethers. As the mixed solvents of cyclic carbonates and non-cyclic carbonates, preferable are mixed solvents containing ethylene carbonate, dimethyl carbonate, and ethyl methyl carbonate since an operational temperature range is wide, a load property is superior, and difficult degradability is secured even if graphite materials such as natural graphite, and artificial graphite are used as the negative electrode active material. In addition, the electrolytic solutions containing Lithium salts containing fluorine such as $TiPF_6$ organic solvents having a fluorine substituent are preferably used since a particularly superior effect of an improvement in safety can be obtained. Mixed solvents containing dimethyl carbonate and ethers having a fluorine substituent such as pentafluoropropyl methyl ether, and 2,2,3,3-tetrafluoropropyl difluoromethyl ether are superior also in large current discharge property, and are therefore further preferable.

Instead of the above-described electrolytic solution, a solid electrolyte may also be used. As the solid electrolyte, for example, organic polymer electrolytes such as polyethylene oxide type polymer compounds, polymer compounds containing at least one of polyorganosiloxane chain and polyoxyalkylene chain, can be used. Further, what is called gel type electrolytes obtained by causing a polymer compound to retain a non-aqueous electrolyte solution can also be used. Moreover, inorganic solid electrolytes containing sulfides such as $Li_2S-SiS_2$, $Li_2S-GeS_2$, $Li_2S-P_2S_5$, $Li_2S-B_2S_3$, $Li_2S-SiS_2-Li_3PO_4$, and $Li_2S-SiS_2-Li_2SO_4$ may also be used. By using these solid electrolytes, safety can be further enhanced in some cases. In the nonaqueous electrolyte secondary battery of the present invention, when the solid electrolyte is used, the solid electrolyte plays a role of the separator in some cases. In these cases, the separator is not necessary in some cases.

Examples

Newt, the present invention will be described in greater detail on the basis of examples. It is to be noted that evaluation and a charge and discharge test of lithium mixed metal oxides (positive electrode active materials) were carried out in the following manner.

1. Charge and discharge test

An N-methyl-2-pyrrolidone (hereinafter, referred to as NMP in some cases) solution of PVdF was added as a binder to a mixture of a positive electrode active material and an electrical conductive material (mixture of acetylene black and graphite of 1:9) so as to give a composition of active material:electrical conductive material:binder = 86:10:4 (ratio by weight), the resultant was kneaded to yield a paste, the paste was applied on an Al foil having a thickness of 40 $\mu$m as a current collector, and vacuum drying was performed at 150°C for 8 hours, whereby a positive electrode was obtained.

The resultant positive electrode was combined with a solution (hereinafter, described as $LiPF_6$/EC+DMC+EMC in some cases) prepared by dissolving $LiPF_6$ in a concentration of 1 mol/ liter in a mixed solution of ethylene carbonate (hereinafter, referred to as EC in some cases), dimethyl carbonate (hereinafter, referred to as DMC in some cases), and ethyl methyl carbonate (hereinafter, referred to as EMC in some cases) of a ratio of 30:35:35 (ratio by volume) as an electrolytic solution, a polypropylene porous film as a separator, and metal lithium as a negative electrode, whereby a coin-shaped battery (R2032) was fabricated.

By using the above-described coin-shaped battery, a discharge rate test was carried out under conditions shown below with a temperature maintained at 25°C. In the discharge rate test, the discharge capacity was measured while changing the discharge current in discharging, and a discharge capacity maintenance ratio was calculated according to the formula described below.

<Discharge rate test>

The charge maximum voltage was set to 4.3 V, the charge time was set to 8 hours, the charge current was set to 0.2 mA/cm$^2$. the discharge minimum voltage in discharging was set to a constant level of 3.0 V, and discharge was carried out while changing the discharge current in each cycle as described below. Higher discharge capacity by discharge at 10C (high current rate) means higher output.
Discharge at 1-st and 2-nd cycles (0.2C): discharge current 0.2 mA/cm$^2$
Discharge at 3-rd cycle (1C): discharge current 1.0 mA/cm$^2$
Discharge at 4-th cycle (3C): discharge current 3.0 mA/cm$^2$
Discharge at 5-th cycle (5C): discharge current 5.0 mA/cm$^2$
Discharge at 6-th cycle (10C): discharge current 10 mA/cm$^2$

<Discharge capacity maintenance ratio>

```
Discharge capacity maintenance ratio (%) = discharge

capacity at cycle of given turn/initial discharge capacity

× 100
```

2. Measurement of BET specific surface area of lithium mixed metal oxide

After 1g of a powder was dried in a nitrogen atmosphere at 150°C for 15 minutes, measurement thereof was performed using FlowSorb II 2300 manufactured by Micrometrics.

3. Analysis of composition of lithium mixed metal oxide

After a powder was dissolved in hydrochloric acid, measurement thereof was performed using Inductively Coupled Plasma - Atomic Emission Spectrometry (SPS 3000, hereinafter, referred to as ICP-AES in some cases).

4. Powder X-ray diffractometry of lithium mixed metal oxide

Powder X-ray diffractometry of a Lithium mixed metal oxide was carried out using RINT 2500 TTR-type manufactured by Rigaku Corporation. The Lithium mixed metal oxide was filled on a dedicated substrate, and the measurement was carried out within a range of diffraction angle 2θ = 10° to 90° using a CuKα radiation source, whereby a powder X-ray diffraction pattern was obtained.

Comparative Example 1

1. Production of lithium mixed metal oxide

Lithium carbonate (Li$_2$CO$_3$: manufactured by The Honjo Chemical Corporation) of 39.16 g, nickel hydroxide (Ni (OH)$_2$: manufactured by Kansai Catalyst Co. Ltd.) of 38.23 g, manganese oxide (MnO$_2$: manufactured by Kojundo Chemical Laboratory Co. Ltd.) of 44.43 g, tri-cobalt tetra-oxides (CO$_3$O$_4$: manufactured by Seido Chemical Industry Co., Ltd.) of 7.80 g, and boric acid (H$_3$BO$_3$: manufactured by YCHEM Co., Ltd.) of 1.85 g were weighed, and mixed using a ball mill mixer under conditions shown below, whereby a raw material mixed powder was obtained.

|  |  |
|---|---|
| Pulverization media : | 15 mmφ alumina balls (5.8 kg) |
| Revolution of ball mill : | 80 rpm |
| Volume of ball mill : | 5 L |

The above-described raw material mixed powder was charged in an alumina container, and calcined by retaining a temperature at 1040°C in an air atmosphere for 4 hours, whereby a block object was obtained. This block object was pulverized using a jet mill apparatus (AFG-100, manufactured by Hosokawa Micron Corporation) to yield a powder A$_1$.
As a result of a composition analysis of the ICP of the powder A$_1$, the molar ratio of Li:Ni:Mn:Co was 1.04:0.41: 0,49:0.10. The powder A$_1$ had a BET specific surface area of 2.6 m$^2$/g. As a result of powder X-ray diffractometry, it was found that crystal structure of the powder A$_1$ was a layered structure belonging to the R-3m space group.

2. Discharge rate test of nonaqueous electrolyte secondary battery

A coin-shaped battery was fabricated using the powder A$_1$, and a discharge rate test was carried out to find that the discharge capacities (mAh/g) at 0.2C, 1C, 3C, 5C, and 10C were 140, 120, 97, 82, and 58, respectively, and the capacity maintenance ratios (%) thereat were 100, 86, 69, 59, and 41, respectively.

Example 1

1. Production of lithium mixed metal oxide

In a polypropylene beaker, 83.88 g of potassium hydroxide was added to 200 ml of distilled water and dissolved by stirring to completely dissolve potassium hydroxide, whereby a potassium hydroxide aqueous solution (alkali aqueous solution) was prepared. In a glass beaker, 13.90 g of nickel (II) chloride hexahydrate, 13.95 g of manganese (II) chloride tetrahydrate, and 4.05 g of iron (III) chloride hexahydrate were added to 200 ml of distilled water, and were dissolved by stirring, whereby a nickel-manganese-iron mixed aqueous solution was obtained. While stirring the above-described potassium hydroxide aqueous solution, the above-described nickel-manganese-iron mixed aqueous solution was dropped therein to generate a coprecipitate, and a coprecipitate slurry was thereby obtained.
Subsequently, the coprecipitate slurry was subjected to filtration and washing with distilled water, and dried at 100°C to yield a coprecipitate. The above-described coprecipitate of 2.0 g, lithium hydroxide monohydrate of 1.16 g, and KCl of 1.16 g (37 parts by weight with respect to 100 parts by weight of lithium mixed metal oxide raw material) were dry-mixed using an agate mortar to yield a mixture. The mixture was placed in an alumina calcination vessel, then calcined by retaining a temperature at 800°C in an air atmosphere for 6 hours using an electric furnace, and cooled down to room temperature to yield a calcined article. The calcined article was pulverized, washed with distilled water by decantation, filtrated, and dried at 100°C for 8 hours, whereby a powder B$_1$ was obtained.
As a result of analysis of the composition of the powder B$_1$, the molar ratio of Li:Ni:Mn:Fe: was 1.29:0.41:0.49: 0.10. The powder B$_1$ had a BET specific surface area of 7.6 m$^2$/g, and the average value of particle sizes of primary particles in SEM observation of the powder B$_1$ was 0.2 μm. In addition, as a result of the powder X-ray diffractometry, it was found that the crystal structure of the powder B$_1$ was a layered structure, belonging to the R-3m space group.

2. Discharge rate test of nonaqueous electrolyte secondary battery

A coin-shaped battery was fabricated using the powder B$_1$, and a discharge rate test was carried out to find that the discharge capacities (mAh/g) at 0.2C, 1C, 3C, 5C, and 10C were 135, 120, 109, 97, and 82, respectively, the capacity maintenance ratios (%) thereat were 100, 89, 81, 72, and 61, respectively, and the discharge capacity and the capacity maintenance ratio at 10C were higher than those of A$_1$.

Example 2

1. Production of lithium mixed metal oxide

In a polypropylene beaker, 83.88 g of potassium hydroxide was added to 200 ml of distilled water and dissolved by stirring to completely dissolve potassium hydroxide, whereby a potassium hydroxide aqueous solution (alkali aqueous solution) was prepared. In a glass beaker, 16.04 g of nickel (II) chloride hexahydrate, 13.36g of manganese (II) chloride tetrahydrate, and 2.982 g of iron (II) chloride tetrahydrate where added to 200 ml of distilled water, and dissolved by stirring, whereby a nickel-manganese-iron mixed aqueous solution obtained. While stirring the above-described potassium hydroxide aqueous Solution, above-described nickel-manganese-iron mixed solution was therein to generate a coprecipitate, and a coprecipitate slurry was thereby obtained.
Subsequently, the coprecipitate slurry was subjected to filtration and washing with distilled water, and dried at 100°C to yield a coprecipitate. The above-described coprecipitate of 2.0 g, lithium hydroxide monohydrate of 1.16 g, and KCl of 1.16 g (37 parts by weight with respect to 100 parts by weight of lithium mixed metal oxide raw material) were dry-mixed using an agate mortar to yield a mixture. The mixture was placed in an alumina calcination vessel, then calcined by retaining a temperature at 800°C in an air atmosphere for 6 hours using an electric furnace, and cooled down to room temperature to yield a calcined article. The calcined article was pulverized, washed with distilled water by decantation, filtrated, and dried at 100°C for 8 hours, whereby a powder $B_2$ was obtained.
As a result of analysis of the composition of the powder $B_2$, the molar ratio of Li:Ni:Mn:Fe was 1.10:0.45:0.45: 0.10. The powder $B_2$ had a BET specific surface area of 7. $m^2$/g, and the average value of particle sizes of primary particles in SEM observation of the powder $B_2$ was 0.1 $\mu$m. In addition, as a result of the powder X-ray diffractometry, it was found that the crystal structure, of the powder $B_2$ was a layered structure belonging to the R-3m space group.

2. Discharge rate test of nonaqueous electrolyte secondary battery

A coin-shaped battery was fabricated using the powder $B_2$, and a discharge rate test was carried out to find that the discharge capacities (mAh/g) at 0.2C, 1C, 3C, 5C, and 10C were 140, 122, 115, 104, and 85, respectively, the capacity maintenance ratios (%) thereat were 100, 87, 82, 74, and 61, respectively, and the discharge capacity and the capacity maintenance ratio at 10C were higher than those of $A_1$.

Example 3

1. Production of lithium mixed metal oxide

The same procedure as in Example 2 was carried out to yield a powder $B_3$ except that the amount of KCl was 2.32 g (73 parts by weight with respect to 100 parts by weight of lithium mixed metal oxide raw material), and calcination was performed with the calcination temperature of, the mixture retained at 700°C.
As a result of analysis of the composition of the powder $B_3$, the molar ratio of Li:Ni:Mn:Fe was 1.33:0.45:0.45: 0.10. The powder $B_3$ had a BET Specific surface area of 8.9 $m^2$/g, and the average value of particle sizes of primary particles in SEM observation of the powder $B_3$ was 0.1 $\mu$m. In addition, as a result of the powder X-ray diffractometry, it was found that the crystal structure of the powder $B_3$ was a layered crystal structure belonging to the R-3m space group.

2. Discharge rate test of nonaqueous electrolyte secondary battery

A coin-shaped battery was fabricated using the powder, $B_3$, and a discharge rate test was carried out to find that the discharge capacities (mAh/g) at 0.2C, 1C, 3C, 5C, and 10C were 123, 109, 99, 88, and 76, respectively, the capacity maintenance ratios (%) thereat were 100, 89, 80, 72, and 62, respectively, and the discharge capacity and the capacity maintenance ratio at 10C were higher than those of $A_1$.

Example 4

The coprecipitate obtained in Example 2 of 2.0 g, lithium carbonate of 1.05 g, and KCl of 0.63 g (21 parts by weight with respect to 100 parts by weight of lithium mixed metal oxide raw material) were dry-mixed using an agate mortar to yield a mixture. The mixture was placed in an alumina calcination vessel, then calcined by retaining a temperature at 850°C in an air atmosphere for 6 hours using an electric furnace, and cooled down to room temperature to yield a calcined article. The calcined article was pulverized, washed with distilled water by decantation, filtrated, and dried at 100°C for 8 hours, whereby a powder $B_4$ was obtained.
As a result of analysis of the composition of the powder $B_4$, the molar ratio of Li:Ni:Mn:Fe was 1.21:0.45:0.45:

0.10. The powder $B_4$ had a BET specific surface area of 9.3 m$^2$/g, and the average value of particle sizes of primary particles in SEM observation of the powder $B_4$ was 0.2 $\mu$m. In addition, as a result of the powder X-ray diffractometry, it was found that the crystal structure of the powder $B_4$ was a layered structure, belonging to the R-3m space group.

2. Discharge rate test of nonaqueous electrolyte secondary battery

A coin-shaped battery was fabricated using the powder $B_4$, a discharge rate test was carried out to find that the discharge capacities (mAh/g) at 0.2C, 1C, 3C, 5C, and 10C were 114, 100, 92, 81, and 71, respectively, the capacity maintenance ratios (%) thereat were 100, 88, 81, 71, and 62, respectively, and the discharge capacity and the capacity maintenance ratio at 10C were higher than those of $A_1$.

Comparative Example 2

1. Production of lithium mixed metal oxide

The same procedure as in Example 1 was carried out to yield a powder $A_2$ except that 2.0 g of the coprecipitate in Example 1 and 1,16 g of lithium hydroxide monohydrate were dry-mixed using an agate mortar to yield a mixture, and the mixture was calcined at a temperature retained at 900°C. As a result of analysis of the composition of the powder $A_2$, the molar ratio of Li:Ni:Mn:Fe was 1.30:0.41:0.49:0.10. The powders $A_2$ had a BET specific surface area of 0.3 m$^2$/g, and the average value of particle sizes of primary particles in SEM observation of the powder $A_2$ was 0.7 $\mu$m. In addition, as a result of the powder X-ray diffractometry, it was found that the crystal structure of the powder $A_2$ was a crystal structure, belonging to the R-3m space group.

2. Discharge rate test of nonaqueous electrolyte secondary battery

A coin-shaped battery was fabricated using the powder $A_2$, and a discharge rate test was carried out to find that the discharge capacities (mAh/g) at 0.2C, 1C, 3C, 5C, and 10C were 76, 51, 45, 22, and 14, respectively, the capacity maintenance ratios (%) thereat were 100, 67, 59, 29, and 18, respectively, and the discharge capacity and the capacity maintenance ratio were not sufficient.

Production Example 1 (Production of porous laminate film)

(1) Production of slurry for coating

Calcium chloride (272.7 g) was dissolved in NMP (4200 g), and para-phenylenediamine (132.9 g) was then added thereto, and completely dissolved. To the resultant solution, 243.3 g of terephthalic dichloride was gradually added, polymerization thereof was carried out to yield a para-aramide, and the solution was further diluted with NMP, whereby a para-aramide solution (A) having a concentration of 2.0% by weight was obtained. To 100 g of the resultant para-aramide solution, 2 g of an alumina powder (a) (manufactured by Nippon Aerosil Co., Ltd., Alumina C, average particle size 0.02 $\mu$m) and 2 g of an alumina powder (b) (Sumicorandom manufactured by Sumitomo Chemical Co., Ltd., AA03, average particle size 0.3 $\mu$m) were added as a filler in a total amount of 4 g, these were mixed, treated three times by a nanomizer, further filtrated through a 1000 mesh wire netting, and de-foamed under reduced pressure, whereby a slurry for coating (B) was prepared. The weight of the alumina powders (filler) with respect to the total weight of the para-aramide and the alumina powders was 67% by weight.

(2) Production of porous laminate film and evaluation thereof

A polyethylene porous film (thickness 12 $\mu$m, air permeability 140 sec/100 cc, average pore size 0.1 $\mu$m, porosity 50%) was used as a porous film. On a PET film having a thickness of 100 $\mu$m, the above-described polyethylene porous film was fixed, and the slurry for coating (B) was applied on the porous film by a bar coater manufactured by Tester Sangyo Co., Ltd. The applied porous film on the PET film was, while maintaining the integrity, dipped in water as a poor solvent to precipitate a para-aramide porous film (heat resistant layer). After that, the solvent was dried to yield a porous laminate film 1 in which a heat resistant layer and a shutdown layer where stacked each other. The thickness of the porous laminate film 1 was 16 $\mu$m, while the thickness of the para-aramide porous film (heat resistant layer) was 4 $\mu$m. The porous laminate film 1 had an air permeability of 180 sec/100 cc, and a porosity of 50%. The cross section of the heat resistant layer in the porous laminate film 1 was observed by a scanning electron microscope (SEM) to find that relatively small micropores of about 0.03 $\mu$m to 0.06 $\mu$m and relatively large micropores of about 0.1 $\mu$m to 1 $\mu$m were present. It is to be noted that evaluation of the porous laminate film was carried out by the following method.

<Evaluation of porous laminate film>

(A) Measurement of thickness

The thickness of the porous laminate film and the thickness of the shutdown layer were measured in accordance with JIS standard (K7130-1992). As the thickness of the heat resistant layer, a value obtained by subtracting the thickness of the shutdown layer from the thickness of the porous laminate film was used.

(B) Measurement of air permeability by Gurley method

The air permeability of the porous laminate film was measured by digital timer mode Gurley type Densometer manufactured by Yasuda Seiki Seisakusho Ltd. on the basis of JIS P8117.

(C) Porosity

A sample of the resultant porous laminate film was cut into a square having a side length of 10 cm, and the weight W (g) and the thickness D (cm) thereof were measured. The weights (Wi (g)) of the individual layers in the sample were measured, the volumes of the individual layers were calculated from Wi and the true specific gravities (true Specific gravity i ($g/cm^3$)) of the materials, of the individual layers, and the porosity (% by volume) was calculated according to the following formula. Porosity (% by volume) = $100 \times \{1-(W1/\text{true specific gravity } 1+W2/\text{true specific gravity } 2+\cdots+Wn/\text{true specific gravity } n)/(10 \times 10 \times D)\}$

In each of the above-described examples, when the porous laminate film obtained in Production Example 1 is used as the separator, a lithium secondary battery capable of further increasing thermal film rupture temperature can be obtained.

Industrial Applicability

According to present invention, a layered lithium metal oxide that is composed of fine particles and has high crystallizability can be obtained. Use of the present invention allows provision of a nonaqueous electrolyte secondary battery capable of exhibiting higher output at a higher current rate, and the secondary battery is extremely useful in uses requiring high output at a high current rate, i.e., in nonaqueous electrolyte secondary batteries for automobiles and power tools such as an electric tool.

**Claims**

1. A method for producing a layered lithium mixed metal oxide, the method comprising a step of calcining, in the presence of an inert flux composed of a chlorides, a lithium mixed metal oxide raw material containing a transition metal element and a lithium element so that the molar ratio of the lithium element to the transition metal element may fall within a range of 1 or more and 2 or less.

2. The production method according to Claim 1, wherein the lithium mixed metal oxide raw material is a mixture of a lithium compound and a transition metal element raw material.

3. The production method according to Claim 2, wherein the transition metal element raw material contains Fe.

4. The production method according to Claim 3, wherein the transition metal element raw material contains Fe and further contains one or more elements selected from the group consisting of Ni, Mn, and Co.

5. The production method according to any one of Claims 1 to 4, wherein the inert flux composed of a chloride is KCl.

6. The production method according to any one of Claims 1 to 5, wherein the amount of the inert flux is 0.1 part by weight or more and 100 parts by weight or less with respect to 100 parts by weight of the lithium mixed metal oxide raw material.

7. The production method according to any one of Claims 1 to 6, wherein the retention temperature in the calcination is within a range of from 650°C to 850°C.

8. A layered lithium mixed metal oxide obtained by the production method according to any one of Claims 1 to 7.

9. A positive electrode active material for a nonaqueous electrolyte secondary battery, the positive electrode active material comprising the layered lithium mixed metal oxide according to Claim 8.

10. A positive electrode for a nonaqueous electrolyte secondary battery, the positive electrode comprising the positive electrode active material for a nonaqueous electrolyte secondary battery according to Claim 9.

11. A nonaqueous electrolyte secondary battery comprising the positive electrode for a nonaqueous electrolyte secondary battery according to Claim 10.

12. The nonaqueous electrolyte secondary battery according to Claim 11 further comprising a separator.

13. The nonaqueous electrolyte secondary battery according to Claim 12, wherein the separator is a separator composed 3 of a porous laminate film in which a heat resistant porous layer and a porous film containing a thermoplastic resin stacked each other.

<div style="text-align:center">**INTERNATIONAL SEARCH REPORT**</div>

| International application No. |
|---|
| PCT/JP2009/060809 |

**A. CLASSIFICATION OF SUBJECT MATTER**
*C01G53/00*(2006.01)i, *H01M2/16*(2006.01)i, *H01M4/50*(2006.01)i, *H01M4/52*(2006.01)i

According to International Patent Classification (IPC) or to both national classification and IPC

**B. FIELDS SEARCHED**

Minimum documentation searched (classification system followed by classification symbols)
C01G1/00-57/00, H01M2/00-4/98

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 06-064928 A (Sony Corp.),<br>08 March, 1994 (08.03.94),<br>Par. Nos. [0001], [0010], [0011], [0016] to<br>[0024], [0048] to [0051]; examples<br>(Family: none) | 1,2,6-11<br>3-5,12,13 |
| Y | JP 2007-258139 A (Sumitomo Chemical Co., Ltd.),<br>04 October, 2007 (04.10.07),<br>Claims 3 to 6; Par. Nos. [0011] to [0013]<br>& EP 1879248 A1 & WO 2006/118227 A1 | 3,4 |
| Y | JP 10-324521 A (Ube Industries, Ltd.),<br>08 December, 1998 (08.12.98),<br>Claims 2 to 7; Par. Nos. [0001], [0008];<br>examples 1, 4<br>(Family: none) | 5 |

|☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 July, 2009 (17.07.09) | Date of mailing of the international search report<br>04 August, 2009 (04.08.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| | International application No. |
|---|---|
| | PCT/JP2009/060809 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-324758 A  (Sumitomo Chemical Co., Ltd.), 08 December, 1998 (08.12.98), Claims; Par. Nos. [0001], [0002], [0010], [0017] to [0020]; examples (Family: none) | 12,13 |
| Y | JP 2000-030686 A  (Sumitomo Chemical Co., Ltd.), 28 January, 2000 (28.01.00), Claims; Par. Nos. [0001], [0002], [0029] to [0038], [0067]; examples & US 6447958 B1        & DE 19918856 A1 | 12,13 |
| A | JP 2004-014296 A  (Nichia Chemical Industries, Ltd.), 15 January, 2004 (15.01.04), & US 2003/0124424 A1    & US 2005/0271945 A1 & US 2006/0093549 A1    & EP 1321994 A2 | 1-13 |
| A | JP 2004-006229 A  (Nichia Chemical Industries, Ltd.), 08 January, 2004 (08.01.04), (Family: none) | 1-13 |

Form PCT/ISA/210 (continuation of second sheet) (April 2007)

**INTERNATIONAL SEARCH REPORT**

International application No.

PCT/JP2009/060809

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
Since claims 2-13 directly or indirectly refer to claim 1, the technical feature common to the inventions of claims 2-13 is the technical feature of claim 1. The international search, however, has revealed that the technical feature of claim 1 is not novel since it is disclosed in document JP 06-064928 A (Sony Corp.), 8 March, 1994 (08.03.94), paragraphs [0001], [0010], [0011], [0016]-[0024], [0048]-[0051], and examples. Consequently, the common technical feature is not a special technical feature within the meaning of PCT Rule 13.2, second sentence, since the technical feature of claim 1 makes no contribution over the prior art. Since there is no other common feature which can be considered as (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the
☐ The additional search fees were accompanied by the applicant's protest and, where applicable, payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (April 2007)

**INTERNATIONAL SEARCH REPORT**

International application No.

PCT/JP2009/060809

Continuation of Box No.III of continuation of first sheet(2)

a special technical feature within the meaning of PCT Rule 13.2, second sentence, no technical relationship within the meaning of PCT Rule 13 can be seen among those different inventions.

It is therefore obvious that the inventions of claims 1-13 do not satisfy the requirement of unity of invention.

Form PCT/ISA/210 (extra sheet) (April 2007)

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10324521 A
- JP 2000030686 A
- JP 10324758 A